Europäisches Patentamt

European Patent Office

Office européen des brevets

(11) Numéro de publication: **0 429 335 B1**

(12) **FASCICULE DE BREVET EUROPEEN**

(45) Date de publication de fascicule du brevet: **12.10.94** (51) Int. Cl.5: **G01S 13/52**, G01S 7/02

(21) Numéro de dépôt: **90403196.0**

(22) Date de dépôt: **09.11.90**

(54) **Radar doppler pour la détection et la localisation d'hélicoptères.**

(30) Priorité: **17.11.89 FR 8915101**

(43) Date de publication de la demande:
**29.05.91 Bulletin 91/22**

(45) Mention de la délivrance du brevet:
**12.10.94 Bulletin 94/41**

(84) Etats contractants désignés:
**DE GB SE**

(56) Documents cités:
EP-A- 0 045 508       EP-A- 0 096 883
EP-A- 0 102 640       DE-A- 3 600 827
FR-A- 2 463 938       US-A- 4 275 396

(73) Titulaire: **THOMSON-CSF**
**173, Boulevard Haussmann**
**F-75008 Paris (FR)**

(72) Inventeur: **Guillerot, Jean-Claude**
**THOMSON-CSF,**
**SCPI,**
**B.P. 329**
**F-92402 COURBEVOIE CEDEX (FR)**
Inventeur: **Chanot, Claude**
**THOMSON-CSF,**
**SCPI,**
**B.P. 329**
**F-92402 COURBEVOIE CEDEX (FR)**
Inventeur: **Girou, Thierry**
**THOMSON-CSF,**
**SCPI,**
**B.P 3297**
**F-92402 COURBEVOIE CEDEX (FR)**
Inventeur: **De Grancey, Patrick**
**THOMSON-CSF,**
**SCPI,**
**B.P. 329**
**F-92402 COURBEVOIE CEDEX (FR)**

(74) Mandataire: **Beylot, Jacques et al**
**Thomson-CSF**
**SCPI**
**B.P. 329**
**F-92402 COURBEVOIE CEDEX (FR)**

# Description

La présente invention concerne la détection et la localisation d'hélicoptères en vol stationnaire, cette détection devant se faire en un temps court à partir du moment où le ou les hélicoptères se démasquent hors d'un écran de végétation.

Il est connu qu'on peut identifier un hélicoptère à partir des échos de son rotor dits éclairs de pale. Ces échos présentent certaines caractéristiques spécifiques notamment un large spectre de fréquence dû à l'effet Doppler sur les pales en rotation du rotor et une modulation d'amplitude due aux passages périodiques des pales à la perpendiculaire de l'axe radar-hélicoptère qui peuvent être exploités pour distinguer les hélicoptères des autres objectifs.

On connaît par exemple, par le brevet français FR-A-2.463.938, un radar opérant à basse fréquence dans la bande des 160 MHz où les éclairs de pale se recoupent. Dans ce type de radar, on extrait, pour chaque case distance, le module du signal d'écho après une démodulation synchrone en phase et en quadrature et un filtrage Doppler éliminant les composantes d'écho dues aux objectifs fixes ou lentement mobiles, et l'on soumet ledit module à un filtrage passe-haut pour en extraire la modulation d'amplitude et déclencher un circuit à seuil.

Ce type de radar a pour inconvénient d'avoir un aérien volumineux étant donné sa basse fréquence de fonctionnement et d'être de ce fait relativement peu mobile.

On connaît également, par le brevet américain US-A-4,275,395 un radar Doppler aéroporté à impulsions détectant les hélicoptères grâce aux éclairs de pale et comportant trois processeurs de filtrage Doppler, un premier adapté au spectre de fréquence des échos sur les pales avançantes, un deuxième adapté au spectre de fréquence des échos sur les pales reculantes et un troisième adapté au spectre de fréquence des interférences. Chaque processeur de filtrage élimine les échos trop longs pour être des éclairs de pale par un circuit de contraste, le troisième éliminant par analyse fréquentielle les échos parasites ne pouvant provenir d'éclairs de pales.

Un tel radar a pour inconvénient d'avoir une structure complexe. En outre la détection des échos parasites par une analyse fréquentielle a l'inconvénient d'aboutir à une désensibilisation du radar sur une fenêtre temporelle assez longue en présence d'échos parasites.

On connaît également, par le brevet européen EP-A-0096883, un radar Doppler à impulsions, non spécifiquement destiné à la détection d'hélicoptère, équipé d'un dispositif de suppression des impulsions parasites isolées.

La présente invention a pour but de lutter contre les inconvénients précités et, plus généralement, de permettre la détection et la localisation d'hélicoptères au moyen de radars opérant dans des bandes de fréquences allant de 300 MHz à 20 GHz et comportant des dispositifs de traitement aussi simples que possible.

Elle a pour objet un radar Doppler de détection et de localisation d'hélicoptères par les éclairs de pale engendrant au moins deux impulsions d'interrogation sur la durée d'un éclair de pale pendant le temps de passage du lobe d'antenne d'émission dans une direction donnée. Ce radar comporte en réception :

- des moyens de filtrage Doppler à bande large adaptés au large spectre de fréquence des éclairs de pale formés d'au moins une cellule opérant en parallèle sur les composantes en phase et en quadrature du signal d'écho instantané pour une case distance donnée et comportant, pour chacune desdites composantes, un soustracteur recevant sur ses deux entrées, la composante considérée, directement sur l'une de ses entrées et par l'intermédiaire d'un circuit à retard sur son autre entrée, ledit circuit à retard introduisant un retards de deux périodes de récurrence de l'impulsion d'interrogation, et
- des moyens de sélection des échos en fonction de leur durée opérant sur le module du signal dont les composantes en phase et en quadrature proviennent des moyens de filtrage Doppler et comportant des moyens d'élimination des échos trop longs éliminant les échos dont la durée correspond au temps de passage du lobe d'antenne d'émission par une direction fixe et des moyens d'élimination des échos trop courts éliminant les échos dont la durée ne dépasse pas une période de récurrence de l'impulsion d'interrogation.

De manière avantageuse, le radar Doppler a une vitesse ambiguë de l'ordre de 450 m/s et des moyens de filtrage Doppler constitués d'une ou plusieurs cellules en cascade ayant un zéro à la fréquence zéro pour éliminer les échos fixes ou lentement mobiles et un zéro à la demi-fréquence de récurrence des impulsions d'interrogation.

D'autres caractéristiques et avantages de l'invention ressortiront de la description ci-après d'un mode de réalisation donné à titre d'exemple.

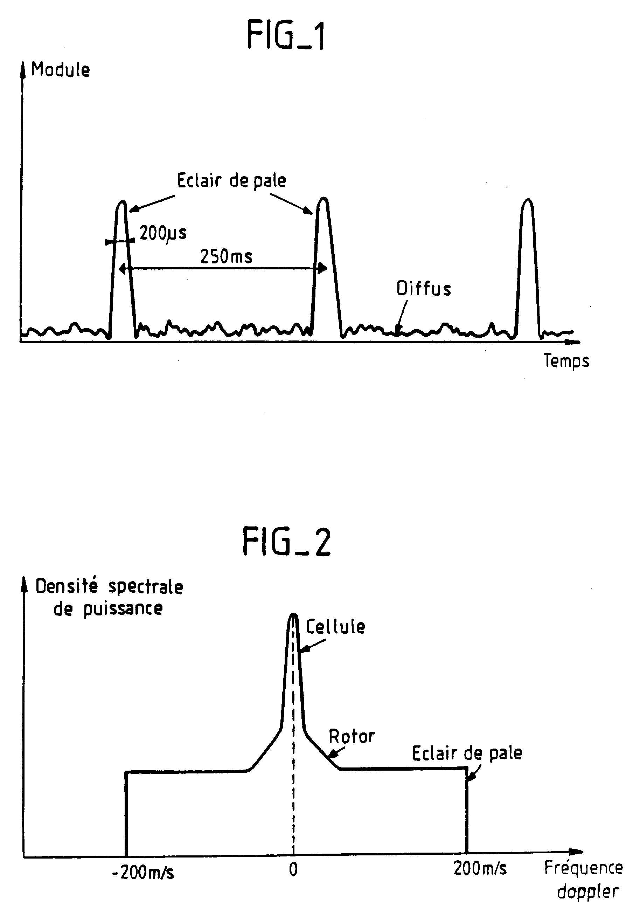

Cette description sera faite en regard du dessin dans lequel :
- une figure 1 représente le module après élimination de la composante continue, de la signature temporelle typique d'un hélicoptère en vol stationnaire ;

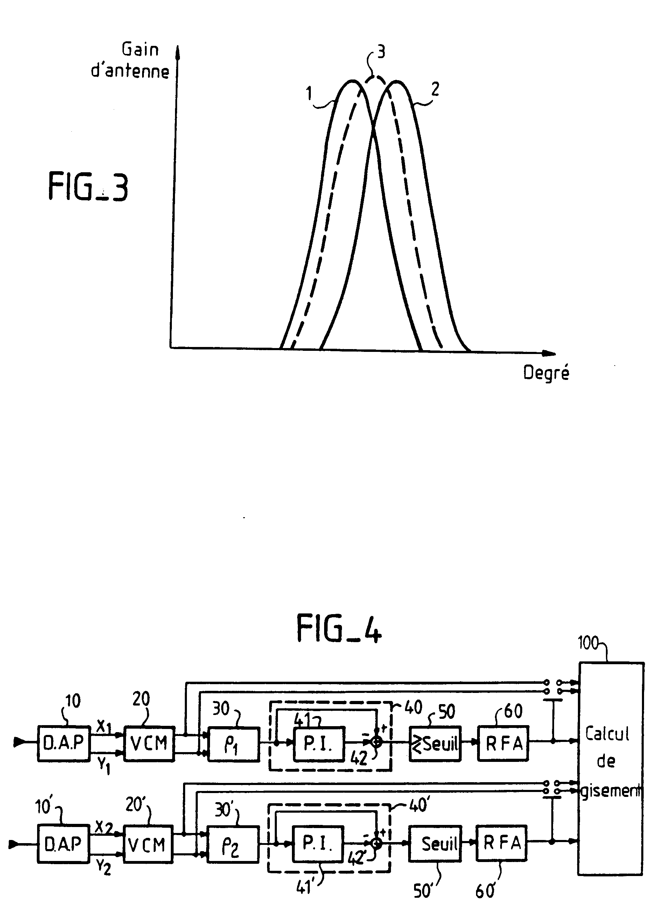

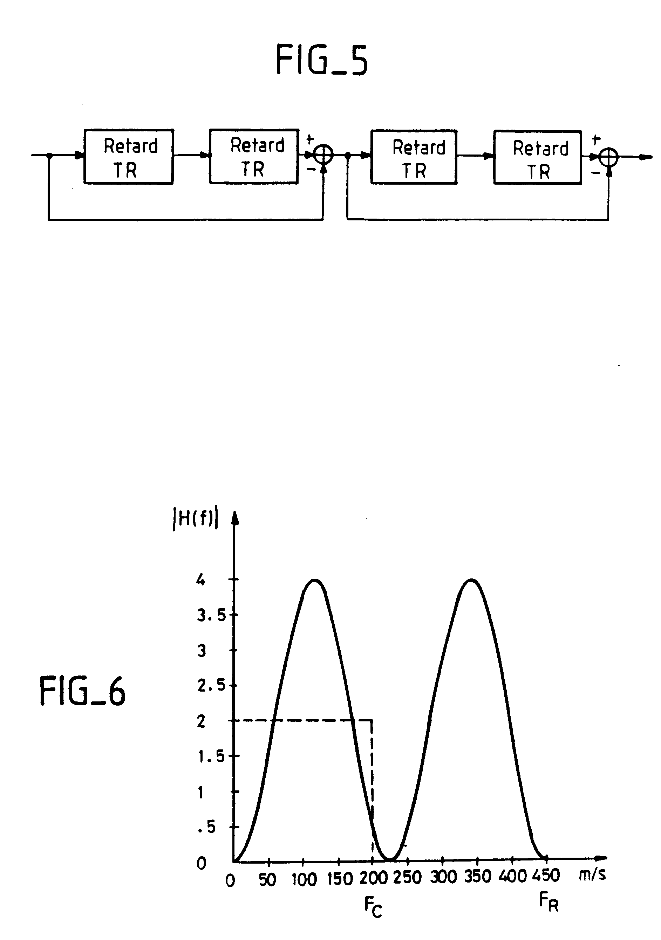

- une figure 2 représente la signature en fréquence typique d'un hélicoptère en vol stationnaire ;
- une figure 3 représente les diagrammes de rayonnement des antennes d'émission et de réception d'un radar selon l'invention ;
- une figure 4 représente un schéma synoptique d'une chaîne de traitement du signal de réception d'un radar selon l'invention ;
- une figure 5 représente un schéma synoptique d'un filtre Doppler utilisé dans la chaîne de traitement de signal de réception de la figure 4 et
- une figure 6 représente la fonction de transfert du filtre Doppler dont le schéma est illustré à la figure 5.

Dans la bande de fréquence de 300 MHz à 10 GHz la signature électromagnétique d'un hélicoptère est constituée de la superposition de signaux de caractéristiques très différentes :

- l'écho sur la cellule qui, pour un hélicoptère en vol stationnaire, est identique à un écho fixe non affecté de décalage Doppler. Comme le radar doit être protégé contre les échos liés à l'environnement (réflexions sur le sol, des bâtiments, des oiseaux, des insectes), cette composante de la signature est éliminée ;
- les réflexions sur le rotor qui produisent une signature temporelle très caractéristique formée d'éclairs de pale de forte intensité mais de courte durée se produisant chaque fois qu'un pale passe par la perpendiculaire à l'axe radar-hélicoptère.

La durée d'un éclair de pale $\Delta\tau$ prise à 3dB sous le maximum est donnée par la formule suivante :

$$\Delta\tau = \frac{1,39}{\pi} \cdot \frac{\lambda}{L\,\Omega}$$

avec

$\Delta\tau$ :   largeur de l'éclair de 3dB en seconde
$\lambda$ :   longueur d'onde d'émission du radar en mètre
$L$ :   longueur de la pale en mètre
$\Omega$ :   vitesse de rotation du rotor en radian par seconde.

Typiquement, en bande S ($\lambda$ = 10 cm) cette largeur $\Delta\tau$ vaut 200 $\mu$s environ.

La fréquence d'apparition des éclairs de pale n'est fonction que des caractéristiques du rotor (vitesse de rotation des pales, nombre de pales, parité du nombre de pales). Cette fréquence est typiquement comprise entre 20 et 40 Hz et peut descendre en dessous de 10 Hz pour quelques rares types d'hélicoptères. Dans le cas, même relativement favorable où la fréquence des éclairs est de 40 Hz, la période entre deux éclairs de 250 ms est considérablement plus grande que la durée de l'éclair (200 $\mu$s en bande S).

Entre les éclairs de pale, il existe aussi un signal permanent de faible puissance, appelé diffus, qui est également lié aux réflexions sur le rotor.

La figure 1 représente le module, au cours du temps, du signal rétrodiffusé par un hélicoptère en vol stationnaire, en réponse aux impulsions d'interrogation d'un radar fonctionnant en bande S ($\lambda$ = 10 cm) lorsque l'on a éliminé la composante continue due à la cellule et aux échos fixes parasites. On y voit une suite d'impulsions dues aux éclairs de pale émergeant d'un signal de bruit du au diffus.

La figure 2 représente le spectre en puissance, en fonction de la fréquence Doppler du signal rétrodiffusé par un hélicoptère en vol stationnaire tel qu'on peut le mesurer sur un temps court. On y voit une raie spectrale à la fréquence zéro due à la cellule et un spectre large d'éclairs de pale du au rotor, de densité à peu près constante, de 0 à 200 m/s pour une pale avançante et de - 200 m/s à 0 pour une pale reculante avec une remontée aux basses fréquences due à la partie centrale du rotor. Pour un hélicoptère en déplacement, ce spectre est décalé de la vitesse radiale de l'hélicoptère.

La chaîne d'émission du radar qui va être décrit ne sera pas détaillée car elle est conventionnelle, ses éléments étant typiques d'un radar cohérent à impulsions.

L'antenne d'émission illumine la zone de l'espace où l'on s'attend à trouver un hélicoptère. Elle est tournante pour pouvoir assurer une veille sur 360°, à une cadence suffisamment rapide de l'ordre d'un tour par seconde pour renouveler les veilles fréquemment et limiter le temps de réaction. La contrainte pour être sûr de voir la cible est que le temps de passage du lobe de l'antenne d'émission dans une direction donnée soit au moins supérieur à la durée séparant deux éclairs de pale consécutifs ce qui impose un lobe relativement large. A la place d'une antenne tournante d'émission on peut envisager une antenne fixe d'émission si le secteur où l'on attend la cible est limité en gisement.

Le radar émet une suite d'impulsions d'interrogation à même fréquence d'émission à une cadence de récurrence à la fois suffisamment rapide pour qu'il y ait au moins deux impulsions d'interrogation sur la durée d'un éclair de pale (ce qui est équivalent à avoir une vitesse ambiguë supérieure à 400 m/s) et suffisamment lente pour éviter les ambiguité en distance. Dans le cas décrit, d'un radar fonctionnant en bande S à une longueur d'onde de 10 cm, cette cadence de récurrence est de l'ordre de 9 KHz ce qui représente une impulsion d'interrogation toutes les 110 µs alors que la largeur d'un éclair de pale de 3 dB vaut typiquement, comme on l'a vu précédemment, 200 µs environ. Chaque impulsion d'interrogation peut être modulée ou non selon un code de compression quelconque.

La tête de la chaîne de réception fournissant le signal vidéo est également conventionnelle. La signal délivré par l'antenne de réception est démodulé par la porteuse d'émission puis, après des transpositions éventuelles en fréquence intermédiaire, filtré par un filtre adapté à l'impulsion émise. Il est ensuite échantillonné avec un pas constant à l'intérieur de la période de récurrence, pas qui correspond à la profondeur en distance de la cellule de résolution du radar. On obtient ainsi, pour une voie de réception donnée, dans chaque case distance, les composantes en phase et en quadrature des échos d'impulsions en bande de base.

Pour allier un gain important à un domaine de veille élargi on utilise une antenne de réception multilobe. Celle-ci peut par exemple posséder comme illustré à la figure 3, deux lobes de réception 1 et 2 qui sont décalés en gisement, se superposent partiellement et recouvrent le lobe d'émission 3. Ces lobes de réception décalés permettent une localisation précise d'une cible par du monopulse d'amplitude mais également, et c'est l'avantage par rapport à du monopulse de phase, d'avoir une durée d'écoute plus longue quitte à ne pas faire d'écartométrie sur les bords d'attaque et de fuite du multilobe. On augmente ainsi les chances d'intercepter des éclairs de pale par une antenne tournante notamment lorsque la fréquence d'apparition des éclairs est basse.

La figure 4 est un schéma synoptique d'une chaîne de traitement du signal de réception spécialisée dans l'identification d'hélicoptère. Celle-ci comporte deux voies identiques, une par lobe de réception, aboutissant sur un circuit de calcul de gisement 100.

On distingue, en tête de chaque voie, un détecteur amplitude phase DAP 10, respectivement 10', qui délivre les composantes en phase et en quadrature X1 et Y1, respectivement X2 et Y2, du signal d'un lobe de réception 1, respectivement 2, après que celui-ci ait subi une transposition en bande de base et un filtrage adapté à l'impulsion émise, ces composantes étant échantillonnées de manière synchrone et correspondant à une même case distance radar.

Les composantes en phase et en quadrature délivrées par le détecteur amplitude phase 10, respectivement 10', sont appliquées à un filtre Doppler dit de visualisation de cible mobile VCM 20, respectivement 20', qui élimine les échos fixes et les parasites lentement mobiles pour ne laisser passer que les échos utiles à large spectre de fréquence. Ce filtre VCM 20, respectivement 20', est adapté au spectre des éclairs de pale qui s'étale comme on l'a vu précédemment de - 200 m/s à + 200 m/s. Il présente un zéro à la fréquence zéro pour éliminer les échos de sol et un zéro à la moitié de la fréquence de récurrence des impulsions d'interrogation qui, compte tenu de la vitesse Doppler ambiguë de 450 m/s du radar décrit, se situe dans une plage supérieure à + 200 m/s et inférieure à - 200 m/s où il n'y a pas de signal utile. Une manière simple de réaliser un tel filtre consiste à faire la différence entre deux échantillons séparés de deux périodes de récurrence TR des impulsions d'interrogation. Il est alors constitué d'une cellule formée d'un circuit à retard introduisant sur les échantillons un délai de deux périodes de récurrence TR des impulsions d'interrogation et d'un soustracteur dont les deux entrées sont connectées à la sortie du détecteur amplitude phase, l'une l'entrée additive par l'intermédiaire du circuit à retard et l'autre, l'entrée soustractive, directement. Pour améliorer la rejection des échos fixes on peut mettre en cascade au moins deux cellules de ce type comme c'est le cas dans la structure de filtre Doppler VCM représentée à la figure 5. La réponse d'un tel filtre Doppler VCM à deux cellules en cascade à un signal impulsionnel disponible sous la forme de la suite d'échantillons 00100... est alors la suite d'échantillons 0010-20100... Sa fonction de transfert est représentée à la figure 6.

Pour le filtre Doppler VCM 20, 20' on peut adopter une structure de filtre numérique plus complexe avec d'autres coefficients de pondération de manière à obtenir une fonction de transfert plus "carrée". On peut également remplacer ce filtre Doppler VCM par un banc de trois filtres Doppler VCM, un premier ayant une fonction de transfert passante dans la bande de 10 à 200 m/s pour les pales avançantes, un deuxième ayant une fonction de transfert passante dans la bande de - 200 à - 10 m/s pour les pales reculantes et un troisième ayant une fonction de transfert du type décrit précédemment pour les hélicoptères ayant simultanément des pales avançante et reculante. L'adoption d'un tel banc de trois filtres permet d'améliorer le rapport signal sur bruit des échos d'éclair de pale.

Les composantes en phase et en quadrature du filtre Doppler VCM 20, 20' sont appliquées à un circuit de calcul de module 30 respectivement 30' qui effectue l'opération

$$\rho = \sqrt{x^2 + y^2}$$

Pour le calcul du module, d'autres fonctions approchant la détection linéaire, quadratique ou logarithmique peuvent également être utilisées.

Le module instantané délivré par le circuit de calcul de module 30, 30' est alors appliqué à un circuit de contraste 40 respectivement 40' éliminant les échos trop longs pour être des éclairs de pale. Ce circuit de contraste, 40, 40' élimine les échos provenant de cibles mobiles autres que des hélicoptères dont les modules varient comme le lobe d'antenne d'émission-réception c'est à dire dont la durée correspond au temps de passage du lobe d'antenne d'émission-réception par une direction fixe. Pour ce faire, il soustrait au module instantané délivré par le circuit de calcul de module 30, 30' une valeur d'ambiance estimée qui est la valeur moyenne du module dans une fenêtre temporelle entourant l'échantillon à tester sur une durée de l'ordre du temps de passage du lobe de l'antenne d'émission par une direction fixe. Il comporte à cet effet un circuit de post intégration PI, 41, 41' calculant la valeur d'ambiance à partir des échantillons de module délivrés par le circuit de calcul de module 30, 30' et un circuit soustracteur 42, 42' dont les entrées sont connectées au circuit de calcul de module 30, 30' l'une, l'entrée additive, directement, l'autre, l'entrée soustractive, par l'intermédiaire du circuit du post intégration PI, 41, 41'.

Le signal issu du circuit de contraste, 40, 40' est appliqué à un comparateur à seuil 50 respectivement 50'. Lorsque le seuil est dépassé, il y a présence d'écho.

Le circuit à seuil 50, 50' est suivi d'un circuit de réduction de fausse alarme RFA 60, respectivement 60' qui élimine les échos trop courts pour être des éclairs de pale. Ce circuit de réduction de fausse alarme RFA 60, 60' met en oeuvre un critère 2/2. Lorsqu'il y a deux détections successives de présence d'écho par le comparateur à seuil 50, 50' le critère est vérifié et il y a présence d'éclair de pale sur la voie considérée. Ce critère permet d'éliminer les réponses parasites impulsionnelles isolées dues par exemple à des interférences créées par d'autres radars fonctionnant dans la même bande. En effet, la forme de la réponse impulsionnelle (..0010-20100..) du filtre Doppler VCM 20, 20' fait qu'il transforme les réponses impulsionnelles isolées en suites d'impulsions isolées qui ne vérifient pas un critères 2/2. Par contre, un éclair de pale dure deux à trois récurrences successives et passe le critère.

Les informations de présence d'éclair de pale disponibles en sortie des circuits de réduction de fausse alarme 60, 60' et les composantes en phase et en quadrature des échantillons de signaux de réception en sortie des filtres Doppler VCM 20, 20' sur les deux voies sont transmis au circuit de calcul de gisement 100.

Lorsqu'il y a une information de présence d'éclair de pale simultanément sur les deux voies, les composantes disponibles en sortie des filtres Doppler VCM 20, 20' sont utilisées dans le circuit de calcul de gisement 100 pour construire un rapport d'écartométrie donnant la position de l'hélicoptère relativement à la direction donnée par le point de recoupe des deux lobes (1, 2 figure 3) de réception à l'instant correspondant. L'écart angulaire est déterminé par le rapport d'écartométrie des deux voies et la connaissance de la fonction inverse (tabulée par exemple) du rapport des gains de réception.

Lorsqu'il n'y a une information de présence d'éclair de pale que sur une voie, cela signifie que l'éclair de pale est arrivé sur un bord extérieur du multilobe. La gisement de l'hélicoptère est alors donné par la direction du lobe de réception ayant donné lieu à la détection à cet instant.

A la suite du circuit de calcul de gisement 100 il y a un dispositif de poursuite sur information discontinue qui associe aux valeurs de gisement calculées pour les différents éclairs de pale détectés une information de qualité et une fenêtre angulaire liée à cette information de qualité qui dépendent de la possibilité ou non d'une écartométrie et de la valeur du rapport signal à bruit. Ces informations de qualité et ces fenêtres angulaires permettent de faire des recoupements entre les diverses valeurs de gisement obtenues pour des éclairs de pale soit de tour d'antenne à tour d'antenne pour distinguer les éclairs de pale provenant d'un même hélicoptère et affiner la précision de repérage de cet hélicoptère en choisissant la valeur de gisement associée à la meilleure information de qualité et à la fenêtre angulaire la plus étroite, soit à l'intérieur même d'un tour d'antenne pour discriminer éventuellement deux hélicoptères se trouvant dans la même case distance et dans l'ouverture du faisceau.

## Revendications

1. Radar Doppler de détection et de localisation d'hélicoptères par les éclairs de pale engendrant au moins deux impulsions d'interrogation sur la durée d'un éclair de pale pendant le temps de passage du lobe d'antenne d'émission dans une direction donnée, caractérisé en ce qu'il comporte en réception :
   - des moyens de filtrage Doppler (20, 20') à bande large adaptés au large spectre de fréquence des éclairs de pale formés d'au moins une cellule opérant en parallèle sur les composantes en phase et en quadrature du signal d'écho instantané pour une case distance donnée et comportant, pour chacune desdites composantes, (figure 5) un soustracteur recevant sur ses deux entrées la composante considérée, directement sur une de ses entrées et par l'intermédiaire d'un circuit à retard sur son autre entrée, ledit circuit à retard introduisant un retard de deux périodes de récurrence de l'impulsion d'interrogation, et

- des moyens de sélection des échos en fonction de leur durée opérant sur le module du signal dont les composantes en phase et en quadrature proviennent des moyens de filtrage Doppler (20, 20') et comportant des moyens d'élimination des échos trop longs (40, 40') éliminant les échos dont la durée correspond au temps de passage du lobe d'antenne d'émission par une direction fixe et des moyens d'élimination des échos trop courts (60, 60') éliminant les échos dont la durée ne dépasse pas une période de récurrence de l'impulsion d'interrogation.

2. Radar selon la revendication 1, caractérisé en ce que lesdits moyens de filtrage Doppler sont formés (figure 5) de deux cellules identiques disposées en cascade opérant en parallèle sur les composantes en phase et en quadrature du signal d'écho instantané pour une case distance donnée, chaque cellule comportant, pour chacune desdites composantes (figure 5) un soustracteur recevant sur ses deux entrées la composante considérée, directement sur une de ses entrées et par l'intermédiaire d'un circuit à retard sur son autre entrée, ledit circuit à retard introduisant un retard de deux périodes de récurrence de l'impulsion d'interrogation.

3. Radar selon la revendication 1, comportant deux voies de réception (1,2 figure 3) dont les diagrammes d'antenne sont décalés en gisement et se recouvrant partiellement, et des moyens de calcul de gisement (100 figure 5) effectuant une écartométrie lorsque des détections de signal utile se produisent simultanément sur les deux voies de réception, caractérisé en ce qu'il comporte un dispositif de poursuite sur information discontinue associant aux valeurs de gisement calculées pour les différents éclairs de pale détectés, une information de qualité et de largeur de fenêtre de corrélation angulaire, et permettant d'affiner la précision de désignation d'objectif à partir des différents éclairs de pale interceptés en provenance d'un même hélicoptère.

## Claims

1. Doppler radar for detecting and locating helicopters through the blade glints generating at least two interrogation pulses over the duration of a blade glint during the time of transit of the transmitting antenna lobe in a given direction, characterized in that it includes at reception:
   - broadband Doppler filtering means (20, 20') matched to the wide frequency spectrum of the blade glints formed by at least one cell operating in parallel on the phase and quadrature components of the instantaneous echo signal for a given range bin and including, for each of the said components (Figure 5), a subtractor receiving on its two inputs the relevant component, directly on one of its inputs and via a delay circuit on its other input, said delay circuit introducing a delay of two recurrence periods of the interrogation pulse, and
   - duration-dependent echo selection means operating on the modulus of the signal whose phase and quadrature components originate from the Doppler filtering means (20, 20') and including extra-long echo elimination means (40, 40') eliminating the echoes whose duration corresponds to the time of transit of the transmitting antenna lobe through a fixed direction and extra-short echo elimination means (60, 60') eliminating the echoes whose duration does not exceed one recurrence period of the interrogation pulse.

2. Radar according to Claim 1, characterized in that the said Doppler filtering means are formed (Figure 5) by two identical cascaded cells operating in parallel on the phase and quadrature components of the instantaneous echo signal for a given range bin, each cell including, for each of the said components (Figure 5), a subtractor receiving on its two inputs the relevant component, directly on one of its inputs and via a delay circuit on its other input, the said delay circuit introducing a delay of two recurrence periods of the interrogation pulse.

3. Radar according to Claim 1, including two reception paths (1, 2 Figure 3) whose antenna diagrams are shifted in bearing and overlap partially, and means for computing bearing (100 Figure 5) making an angular deviation measurement when useful-signal detections occur simultaneously on the two reception paths, characterized in that it includes a device for tracking in relation to a discontinuous datum associating with the bearing values computed for the various detected blade glints, a datum of quality and of width of angular correlation window, and allowing refinement of the accuracy of target designation based on the various intercepted blade glints originating from the same helicopter.

**Patentansprüche**

1. Dopplerradar zur Erfassung und Ortung von Hubschraubern durch die von den Rotorblättern hervorgerufenen Radarblitze, das während der Durchgangszeit der Strahlungskeule der Sendeantenne in einer gegebenen Richtung wenigstens zwei Abfrageimpulse für die Dauer eines von den Rotorblättern hervorgerufenen Radarblitzes erzeugt, dadurch gekennzeichnet, daß es empfangsseitig enthält:
   - Breitband-Doppler-Filtermittel (20, 20'), die an das breite Frequenzspektrum der von den Rotorblättern hervorgerufenen Radarblitze angepaßt sind und aus wenigstens einer Zelle bestehen, die parallel zu den Inphasenkomponenten und den Quadraturphasenkomponenten des momentanen Echosignals für ein gegebenes Entfernungsfenster arbeitet und für jede der Komponenten (Fig. 5) einen Subtrahierer enthält, der an seinen beiden Eingängen die betrachtete Komponente empfängt, und zwar an einem seiner Eingänge direkt und an seinem anderen Eingang über eine Verzögerungsschaltung, wobei die Verzögerungsschaltung eine Verzögerung um zwei Folgeperioden des Abfrageimpulses herbeiführt, und
   - Mittel zur Auswahl der Echos in Abhängigkeit von ihrer Dauer, die auf den Betrag des Signals einwirken, dessen Inphasenkomponenten und dessen Quadraturphasenkomponenten von den Doppler-Filtermitteln (20, 20') stammen, und Mittel (40, 40') zur Beseitigung von zu langen Echos aufweisen, die die Echos beseitigen, deren Dauer der Durchgangszeit der Strahlungskeule der Sendeantenne in einer gegebenen Richtung entspricht, sowie Mittel (60, 60') zum Beseitigen von zu kurzen Echos, welche die Echos beseitigen, deren Dauer eine Folgeperiode des Abfrageimpulses nicht überschreitet.

2. Radar nach Anspruch 1, dadurch gekennzeichnet, daß die Doppler-Filtermittel aus zwei identischen Zellen (Fig. 5) gebildet sind, die in Kaskade geschaltet sind und parallel auf die Inphasenkomponenten und die Quadraturphasenkomponenten des augenblicklichen Echosignals für ein gegebenes Entfernungsfenster einwirken, wobei jede Zelle für jede der Komponenten (Fig. 5) einen Subtrahierer enthält, der an seinen beiden Eingängen die betrachtete Komponente empfängt, und zwar an einem seiner Eingänge direkt und an seinem anderen Eingang über eine Verzögerungsschaltung, wobei die Verzögerungsschaltung eine Verzögerung um zwei Folgeperioden des Abfrageimpulses bewirkt.

3. Radar nach Anspruch 1, das zwei Empfangswege (1, 2; Fig. 3) enthält, deren Antennendiagramme seitenwinkelverschoben sind und sich teilweise überdecken, sowie Seitenwinkelberechnungsmittel (100, Fig. 5), die eine elektronische Ablagemessung durchführen, wenn sich auf den beiden Empfangswegen gleichzeitig die Erfassung von nutzbaren Signalen ergibt, dadurch gekennzeichnet, daß es eine Vorrichtung zur Zielverfolgung aufgrund von diskontinuierlichen Informationen enthält, die den für die verschiedenen erfaßten, von den Rotorblättern hervorgerufenen Radarblitze berechneten Seitenwinkelwerten eine Information über die Qualität und die Breite des Winkelkorrelationsfensters zuordnet und die Verbesserung der Genauigkeit der Objektidentifikation ausgehend von den verschiedenen aufgefangenen, von den Rotorblättern hervorgerufenen Radarblitzen ermöglicht, die von demselben Hubschrauber stammen.

# FIG_1

# FIG_2

FIG_3

FIG_4

# FIG_5

# FIG_6